# EUROPÄISCHE PATENTSCHRIFT

(11) **EP 2 872 862 B1**
(45) Veröffentlichungstag und Bekanntmachung des Hinweises auf die Patenterteilung: **08.08.2018**
(21) Anmeldenummer: 13729374.2
(22) Anmeldetag: 18.06.2013
(51) Int. Cl.: G01L 19/00, G01L 19/14

(54) **DRUCKSENSOR FÜR EINE KLIMAANLAGE**
PRESSURE SENSOR FOR AN AIR-CONDITIONING SYSTEM
CAPTEUR DE PRESSION POUR UNE INSTALLATION DE CLIMATISATION

(30) Priorität: 11.07.2012 DE 102012212155
(43) Veröffentlichungstag der Anmeldung: 20.05.2015
(73) Patentinhaber: PREH GmbH, 97616 Bad Neustadt a.d. Saale (DE)
(72) Erfinder: STÜTZE, Nicole, 95131 Schwarzenbach am Wald (DE); HAUCK, Martin, 96317 Kronach (DE); KREMPEL, Sandro, 96515 Sonneberg (DE); WOLNY, Claudia, 96450 Coburg (DE); REISER, Michael, 98669 Schackendorf (DE); RIENECKER, Maik, 98617 Meiningen (DE); SCHMITT, Hans-Michael, 97616 Bad Neustadt a. d. Saale (DE)
(74) Vertreter: Lohmanns, Bernard
(86) Internationale Anmeldenummer: PCT/EP2013/062589
(87) Internationale Veröffentlichungsnummer: WO 2014/009110

(56) Entgegenhaltungen:
- EP-A1- 0 968 858
- DE-A1- 3 732 583
- DE-A1- 19 745 244
- DE-A1-102005 060 651
- DE-A1-102007 042 789
- DE-U1- 20 217 571
- US-A- 4 343 194
- US-A- 5 233 865
- US-A1- 2004 173 030

## Beschreibung

Die Erfindung betrifft eine Sensorvorrichtung zur Erfassung wenigstens eines Druckes in einem Strömungskanal einer Klimaanlage insbesondere einer Kraftfahrzeugklimaanlage. Insbesondere bei einem Kraftfahrzeug besteht Bedarf, die Energieeffizienz der Klimaanlage zu steigern und damit das Fahrzeug im Hinblick auf den Energieverbrauch zu optimieren. Eine energieeffiziente Regelung kann dadurch realisiert werden, dass bei bekannter Klappenstellung der Luftauslässe die momentane Leistung des Klimaaggregats insbesondere des Gebläses angepasst wird. Es hat sich gezeigt, dass eine Anpassung in Abhängigkeit des gemessenen Volumenstroms effektiv erfolgen kann. Bekannte Luftmassenmesser scheiden aufgrund ihrer Störanfälligkeit als Sensorvorrichtung aus. Vor dem Hintergrund, dass grundsätzlich eine Druckmessung sich als geeignet erwiesen hat, eine volumenstromabhängige Regelung einer Klimaanlage durchzuführen, bestand somit Bedarf nach einer Sensorvorrichtung, die geeignet ist, möglichst den reinen statischen Druck in einem Strömungskanal, also den Druck ohne dynamische Effekte, wie beispielsweise Wirbelbildung und Staudruck durch Anströmung, und insbesondere den Differenzdruck zwischen diesem Druck im Strömungskanal und dem Druck außerhalb, beispielsweise in der Fahrgastzelle, zu messen. Das Dokument DE102007042789 offenbart eine Sensorvorrichtung gemäß Oberbegriff des Anspruchs 1. Vor diesem Hintergrund ist es somit Aufgabe der vorliegenden Erfindung, eine Sensorvorrichtung zur Messung eines Druckes in einem Strömungskanal einer Klimaanlage bereitzustellen, die hinsichtlich der Druckmessung optimiert ist, insbesondere den Druck möglichst ohne dynamische Effekte zu messen. Diese Aufgabe wird erfindungsgemäß durch ein Bedienelement mit den Merkmalen nach Anspruch 1 gelöst. Weitere, besonders vorteilhafte Ausgestaltungen der Erfindung offenbaren die Unteransprüche. Es ist darauf hinzuweisen, dass die in den Patentansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Die erfindungsgemäße Sensorvorrichtung ist zur Erfassung wenigstens eines Druckes in einem Strömungskanal einer Klimaanlage vorgesehen. Sie weist erfindungsgemäß einen Fuß auf, der in erster Linie eine Anlagefläche zum mög lichst druckdichten Anliegen an einer Wand des Strömungskanals definiert. Ferner ist beispielsweise ein Befestigungsmittel vorgesehen, um den Fuß und damit die Sensorvorrichtung an der Wand des Strömungskanals zu befestigen. Hierzu sind beispielsweise lösbare Befestigungsmittel, wie Rast- oder Schraubverbindungsmittel vorgesehen. Der Fuß kann ferner weitere Funktionalitäten übernehmen und beispielsweise der Aufnahme einer elektrischen Steckkontaktierung und/oder einer Mess- bzw. Auswertelektronik dienen.

Erfindungsgemäß umfasst die Sensorvorrichtung ferner einen in den Strömungskanal hineinreichenden Fortsatz. Beispielsweise ist der Fortsatz so ausgebildet, dass er sich von der Wand in Richtung des Querschnittsmittelpunktes des Strömungskanals erstreckt. Typischerweise weist der Fortsatz eine Länge von einigen Dekaden mm, wie etwa 30 mm auf.

Erfindungsgemäß ist ferner ein Drucksensor zur Umwandlung des Druckes in eine elektrische Messgröße vorgesehen. Der Drucksensor ist beispielsweise im Fortsatz angeordnet. Zur Verringerung einer Temperaturbeeinflussung durch eine erwärmte oder gekühlte Luftströmung im Strömungskanal ist der Drucksensor bevorzugt im Fuß insbesondere in dem Bereich des Fußes, der sich jenseits der Anlagefläche außerhalb des durch den Strömungskanal vorgegebenen Volumens befindet, angeordnet.

Erfindungsgemäß weist der Fortsatz wenigstens abschnittsweise ein Flügelprofil auf. Dieses Profil des Flügelprofilabschnitts hat eine gerade Skelettlinie. Der Verlauf der Profilseiten ist bezüglich der Skelettlinie symmetrisch, d.h. der Flügelabschnitt weist einen symmetrischen Dickenverlauf auf. Das Profil weist eine Profilnase und ein Profilende auf. Bei der Anordnung der Sensorvorrichtung bzw. des Fortsatzes in den Strömungskanal ist ein zur Strömungsrichtung möglichst paralleler Verlauf der Skelettlinie angestrebt, wobei die Profilnase vom Luftstrom angeströmt wird und der Luftstrom vom Profilende abströmt. Das Flügelprofil weist beispielsweise eine maximale Profildicke von einigen mm, beispielsweise 4 mm auf. In der dazu und zur Skelettlinie, bzw. Strömungsrichtung senkrechten Richtung weist das Flügelprofil beispielsweise eine Ausdehnung von einigen Dekaden mm, wie 20 bis 40, beispielsweise 30 mm auf.

Erfindungsgemäß ist ferner in jeder Profilseite wenigstens eine Eintrittsöffnung vorgesehen, wobei jede der Eintrittsöffnungen über einen separaten und/oder gemeinsamen Druckkanal mit dem Drucksensor in fluidleitender Verbindung steht. D. h. die Eintrittsöffnung dient jeweils als Messpunkt für die Druckmessung. Es hat sich überraschend herausgestellt, dass eine beidseitige Messung des Druckes auf beiden Profilseiten besonders geringen dynamischen Einflüssen unterliegt. Auch wenn erfindungsgemäß eine unterschiedliche, d.h. asymmetrische Positionierung der Eintrittsöffnung auf den jeweiligen Profilseiten nicht ausgeschlossen sein soll, so ist eine symmetrische Anordnung bezogen auf die durch die Skelettlinie definierte Ebene bevorzugt. Auch wenn jede Eintrittsöffnung durch einen separaten Druckkanal in fluidleitender Verbindung mit dem Drucksensor stehen kann, so ist eine Ausgestaltung bevorzugt, bei der die Eintrittsöffnungen durch eine zur Skelettlinie senkrechten Druckkanalabschnitt zuerst fluidleitend verbunden sind und dann ein weiterer in den vorgenannten Abschnitt mündender Druckkanalabschnitt zur fluidleitenden Verbindung mit dem Drucksensor vorgesehen ist.

Auch wenn beispielsweise ein in einer scharfen Kante langsam auslaufendes Profilende vorteilhaft sein kann, so hat sich nach mehreren Versuchen eine Ausgestaltung als besonders vorteilhaft erwiesen, bei der sowohl die Profilnase als auch das Profilende abgerundet sind. Es hat sich gezeigt, dass dadurch im Eintrittsöffnungsbereich ungünstige Verwirbelungen und turbulente Strömungen vermieden werden können. Gegenüber einem spitzauslaufenden Profilende kann aufgrund der geringeren Ausdehnung des Profils in Strömungsrichtung Bauraum eingespart werden. So ermöglicht die am Profilende vorgesehene Materialstärke eine bevorzugte Anordnung der Eintrittsöffnung möglichst weit beabstandet von der Profilnase bei gleichzeitig bauraumsparender aber strömungstechnisch unschädlich nahen Anordnung am Profilende. Somit kann die Vorrichtung vergleichsweise kompakt ausfallen.
Es hat sich strömungstechnisch und auch bearbeitungstechnisch eine Ausgestaltung als vorteilhaft erwiesen, bei der die Krümmungen der Profilnase und des Profilendes identisch sind.

Auch wenn eine nicht ebene Ausgestaltung der Profilseiten, wie beispielsweise eine gekrümmte, im Wesentlichen tropfenförmige Ausgestaltung des Flügelprofils nicht ausgeschlossen ist, so hat sich eine Ausgestaltung als vorteilhaft erwiesen, bei der die Profilseiten eben sind. Noch bevorzugt sind die Profilseiten parallel zueinander. Beispielsweise ergibt sich ein Flügelprofilabschnitt des Fortsatzes in Form einer Platte mit zwei gegenüberliegen abgerundeten Stirnseiten. Durch die ebenen parallelen Profilseiten hat sich die Vorrichtung als besonders tolerant gegenüber Positionsungenauigkeiten bzw. Ausrichtungsabweichungen erwiesen, weil beispielsweise die Strömungsrichtung im Strömungskanal aufgrund Montageungenauigkeiten doch nicht, wie eigentlich gewünscht, exakt mit der Skelettlinie zusammenfällt. Ferner sind parallele Strömungsrichtungen im Bereich der Profilseiten hinsichtlich der Druckmessung bevorzugt.

Erfindungsgemäß erstrecken sich die ebenen Profilseiten über wenigstens 60 % der Profiltiefe, bevorzugt 70 %, noch bevorzugter 80 % der Profiltiefe zwischen der Profilnase und dem Profilende. Beispielsweise beträgt deren Ausdehnung in Richtung der Skelettlinie 16 mm bei einer Gesamtausdehnung des Profils von 20 mm.

Es hat sich nach umfangreichen Versuchen gezeigt, dass der Abstand des Mittelpunkts der wenigstens einen Eintrittsöffnung zur Profilnasenkante wenigstens dem Dreifachen der Maximaldicke des Flügelprofils entspricht. Beispielsweise beträgt der Abstand 12,5 mm bei einer maximalen Dicke des Profils von 4 mm.

Als Faustregel für die Dimensionierung der Eintrittsöffnung gilt, dass deren Durchmesser dem 0,1-fachen der Maximaldicke des Flügelprofils entsprechen sollte. Die Erfinder haben aber festgestellt, dass in Abweichung von der Regel ein Durchmesser der Eintrittsöffnungen von maximal 2mm mit ausreichender Genauigkeit und bei den hier zur Anwendung kommenden Strömungsgeschwindigkeiten von beispielsweise maximal 15 m/s der Druck gemessen werden kann, d.h. ohne dass dynamische Effekte an der Eintrittsöffnung signifikant zum Tragen kommen. Gemäß einer bevorzugten Ausgestaltung beträgt der Durchmesser 1 mm, insbesondere bei einer Ausgestaltung mit zwei Eintrittsöffnungen pro Profilseite.

Um Strömungseinwirkungen durch die Profilenden auf die Eintrittsöffnungen zu vermeiden ist bzw. sind die Eintrittsöffnungen beabstandet zu den Enden des Flügelprofilabschnitts angeordnet. Beispielsweise beträgt der Abstand wenigstens 12 mm.

Es ist erfindungsgemäß insoweit eine beliebige Ausrichtung des Flügels im Strömungskanal denkbar, dass wenigstens die Skelettlinie in etwa parallel mit der Strömungsrichtung ist und die Profilnase angeströmt wird. Gemäß einer bevorzugten Ausführungsform erstrecken sich jedoch die Profilnase und das Profilende senkrecht zur Anlagefläche und damit dem zugehörigen Wandabschnitt in den Strömungskanal, beispielsweise erstreckt sich der Flügel ausgehend vom Fuß in Richtung des Querschnittmittelpunktes des Strömungskanals.

Bevorzugt ist der Drucksensor als Differenzdrucksensor ausgebildet, und im Fuß ist eine Zusatzöffnung vorgesehen, mit der über einen weiteren Druckkanal der Differenzdrucksensor in fluidleitender Verbindung steht. Besonders bevorzugt endet dieser weitere Druckkanal in einem Bereich des Fußes, der außerhalb des Strömungskanals liegt, wenn der Fuß mit der Anlagefläche an der Wand des Strömungskanals anliegt, um so beispielsweise den Differenzdruck zwischen dem Druck im Strömungskanal und außerhalb des Strömungskanals, beispielsweise in der Fahrgastzelle, zu messen. Es handelt sich beispielsweise um einen piezoelektrischen Differenzdrucksensor.

Der Differenzdrucksensor weist beispielsweise eine Membran auf, an deren eine Seite über die Eintrittsöffnungen und dem zugehörigen Druckkanal der Druck des Strömungskanal anliegt, während an der anderen Seite der Membran über die Zusatzöffnung und den weiteren Druckkanal der außerhalb des Strömungskanals befindliche Druck anliegt.

Gemäß einer weiteren vorteilhaften Ausgestaltung ist ferner ein Temperatursensor, beispielsweise ein NTC-Widerstandssensor, zur Erfassung einer Temperatur im Strömungskanal und Umwandlung in eine elektrische Messgröße vorgesehen.

Aus strömungstechnischen Gründen ist der Temperatursensor am freien, von dem Fuß abgewandten Ende des Fortsatzes angeordnet. Die elektrische Kontaktierung des Temperatursensors erfolgt durch das Innere des Fortsatzes. Beispielsweise überragt der Temperatursensor das Ende des Flügelabschnitts und ist so angeordnet, dass er von der Luftströmung des Strömungskanals umströmt wird. Zum Schutz des Temperatursensors bei gleichzeitig gewährleisteter Umströmung, die auch turbulent sein kann, ist bezogen auf die Strömungsrichtung vor dem Temperatursensor und dazu beabstandet wenigstens ein freistehender Steg vorgesehen. Der Steg kann beispielsweise Teil eines Bügels sein, der am Ende des Fortsatzes ausgebildet ist und den Temperatursensor übergreift.

Bei einer bevorzugten Ausführungsform sind mehrere, zueinander beabstandete, beispielsweise zwei, Eintrittsöffnungen pro Profilseite vorgesehen. Beispielsweise beträgt der Abstand der zwei Eintrittsöffnungen 5mm. Auch wenn erfindungsgemäß pro Seite eine unterschiedliche Anzahl und/oder bezüglich der Seiten eine unsymmetrische Anordnung vorgesehen sein, so ist eine symmetrische Anordnung bevorzugt. Die mehreren Eintrittsöffnungen pro Profilseite steigern die Betriebszuverlässigkeit des Sensors, da der Totalausfall durch Verstopfung unwahrscheinlicher wird. Gemäß einer weiteren bevorzugten Ausgestaltung sind die mehreren Eintrittsöffnungen auf gleicher Profiltiefe angeordnet.

Die Erfindung betrifft ferner eine bevorzugte Verwendung des Bedienelements in einem Kraftfahrzeug.

Weitere Merkmale und Vorteile der Erfindung ergeben sich aus den übrigen Ansprüchen sowie der folgenden Beschreibung von nicht einschränkend zu verstehenden Ausführungsbeispielen der Erfindung, die im Folgenden unter Bezugnahme auf die Zeichnungen näher erläutert werden. In diesen Zeichnungen zeigen schematisch:
Fig. 1 eine Seitenansicht der erfindungsgemäßen Sensorvorrichtung;
Fig. 2 eine Schnittansicht durch den Flügelprofilabschnitt des Fortsatzes der erfindungsgemäßen Sensorvorrichtung aus Fig. 1.

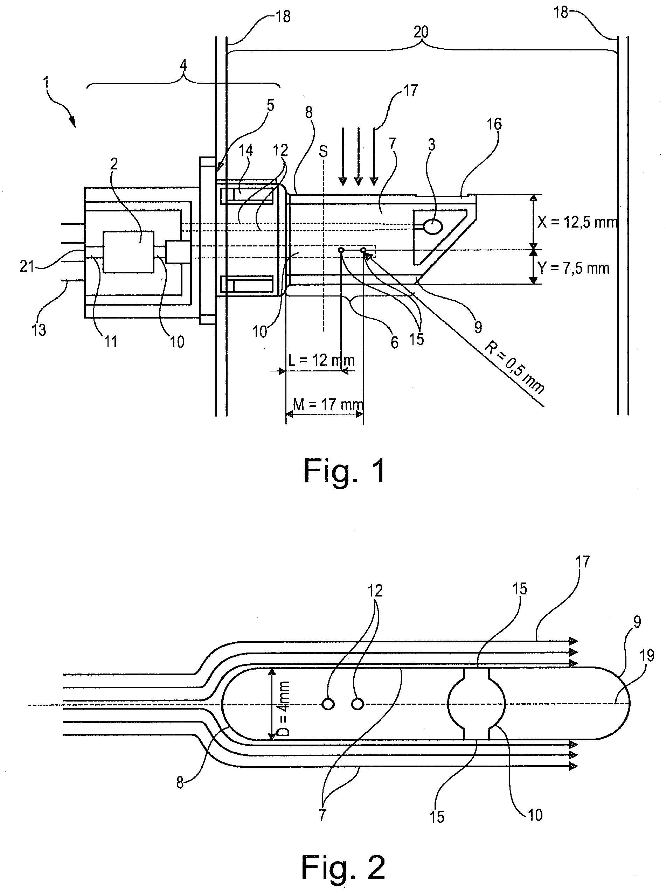

Figur 1 zeigt die erfindungsgemäße Sensorvorrichtung 1 im in einen Strömungskanal 20 eingebauten Zustand. Der Strömungskanal 20 ist Teil einer nicht dargestellten Kraftfahrzeugklimaanlage und dient der Zuführung von gekühlter oder erwärmter Luft in einen Fahrgastraum eines Kraftfahrzeugs mit Hilfe eines Gebläses. Der Strömungskanal 20 wird durch die Wandung 18 definiert. Die Pfeile 17 geben die Strömungsrichtung der Luftströmung im Strömungskanal 20 an. Zur effektiven Steuerung des Gebläses weist die erfindungsgemäße Sensorvorrichtung 1 einen Differenzdrucksensor 2 auf, der die Differenz zwischen dem Druck innerhalb des Strömungskanals 20 und dem außerhalb des Strömungskanals 20 bestimmt. Der Differenzdrucksensor 2 ist im Fuß 4, genauer in dem Bereich des Fußes 4, der sich außerhalb des Strömungskanals 20 befindet, angeordnet. Der Fuß 4 dient ferner der Befestigung der Sensorvorrichtung 1 an der Wand 18 des Strömungskanals 20. Dazu definiert der Fuß 4 eine Anlagefläche 5, mit der dieser druckdicht an der Wand 18 anliegt. Dabei reicht er durch eine Öffnung in der Wand 18 in den Strömungskanal 20 hinein. Es sind Rastnasen 14 am Fuß 4 vorgesehen, die hinter der Wand 18 verrasten, so dass der Fuß 4 lösbar mit der Wand 18 verbunden ist. Der Fuß 4 weist ferner eine elektrische Steckkontaktierung 13 auf.

In Verlängerungsrichtung des Fußes 4 erstreckt sich ein Fortsatz 6, der als ein Flügelprofilabschnitt 6 ausgebildet ist. Ein Schnitt an der mit S bezeichneten Schnittlinie in Figur 1 ist in Figur 2 gezeigt und gibt das Flügelprofil wieder. Das Flügelprofil weist eine bezogen auf die Strömungsrichtung 17 vordere Profilnase 8 und ein hinteres Profilende 9 auf. Zwischen beiden sind ebene und zueinander parallele Profilseiten 7 vorgesehen, die idealerweise parallel zur Strömungsrichtung 17 angeordnet sind. Diese Profilseiten erstrecken sich über 80% der Profiltiefe, d.h. über 80% der Ausdehnung des Flügelprofilabschnitts in der in Figur 1 gezeigten senkrechten, der Strömungsrichtung entsprechenden Richtung. Profilnase und Profilende sind nach außen rund ausgeformt und weisen den gleichen Krümmungsradius auf. Um den im Strömungskanal vorherrschenden Druck, möglichst nur den statische Druck ohne dynamische Einflüsse, mittels des entfernt angeordneten Drucksensor 2 zu messen, sind pro Seitenfläche 7 zwei Eintrittsöffnungen 15 mit einem Durchmesser von 1 mm auf gleicher Profiltiefe angeordnet, die über einen teilweise gemeinsamen Druckkanal 10 durch den Fortsatz 6 und Teile des Fußes 4 in fluidleitender Verbindung mit dem Drucksensor 2 stehen. Die Profilseiten sind bezüglich der Anzahl und Anordnung der Eintrittsöffnungen 15 symmetrisch. Andererseits steht der Differenzdrucksensor 2 über einen weiteren Druckkanal 11 und die Zusatzöffnung 21 mit dem Raum außerhalb des Strömungskanals 20 in fluidleitender Verbindung. Auf dem freien Ende des Fortsatzes 6, diesen verlängernd, ist ein Temperatursensor 3, in Form eines NTC-Widerstandes, angeordnet. Die zugehörige elektrische Kontaktierung 12 ist durch den Fortsatz 6 und Teile des Fußes 4 geführt. Den Temperatursensor 3 übergreift ferner ein Bügel 16, der an seiner in Strömungsrichtung vorderen Seite eine bezüglich seines Querschnitts runden Steg ausbildet, der beabstandet zum Temperatursensor 3 angeordnet ist.

## Patentansprüche

1. Sensorvorrichtung (1) zur Erfassung wenigstens eines Druckes in einem Strömungskanal (20) einer Klimaanlage, aufweisend:
einen Fuß (4), der eine Anlagefläche (5) zum druckdichten Anliegen an einer Wand (18) des Strömungskanals (20) definiert;
einen in den Strömungskanal (18) hineinreichenden Fortsatz (6),
einen Drucksensor (2) zur Umwandlung des Druckes in eine elektrische Messgröße;
wobei der Fortsatz (6) wenigstens einen ein Flügelprofil aufweisenden Flügelabschnitt (6) mit gerader Skelettlinie (19) und diesbezüglich symmetrischem Verlauf der Profilseiten (7), einer Profilnase (8) und einem Profilende (9) ausbildet,
**dadurch gekennzeichnet, dass** in jeder Profilseite (7) wenigstens eine Eintrittsöffnung (15) vorgesehen ist und jede der Eintrittsöffnungen (15) über einen Druckkanal (10) mit dem Drucksensor (2) in fluidleitender Verbindung steht und dass die Profilseiten (7) eben und parallel sind und sich über wenigstens 60% der Profiltiefe erstrecken und dass der Abstand (X) des Mittelpunkts der wenigstens einen Eintrittsöffnung zur Kante der Profilnase (8) wenigstens dem Dreifachen der Maximaldicke (D) des Flügelprofils entspricht.

2. Sensorvorrichtung (1) gemäß dem vorhergehenden Anspruch, wobei der Fortsatz (6) so angeordnet ist, dass die Profilnase (8)vom Luftstrom angeströmt wird und der Luftstrom vom Profilende (9) abströmt.

3. Sensorvorrichtung (1) gemäß einem der vorhergehenden Ansprüche, wobei die Positionierungen der wenigstens einen Eintrittsöffnung (15) auf den Profilseiten symmetrisch ist.

4. Sensorvorrichtung (1) gemäß einem der vorhergehenden Ansprüche, wobei die Profilnase (8) und das Profilende (9)abgerundet sind.

5. Sensorvorrichtung (1) gemäß dem vorhergehenden Anspruch, wobei die Krümmung der Profilnase (8) und des Profilendes (9) identisch sind.

6. Sensorvorrichtung (1) gemäß einem der beiden vorhergehenden Ansprüche, wobei die ebenen Profilseiten (7) sich über wenigstens 70 % der Profiltiefe erstrecken.

7. Sensorvorrichtung (1) gemäß einem der vorhergehenden Ansprüche, wobei der Durchmesser der Eintrittsöffnungen (15) maximal 2mm entspricht.

8. Sensorvorrichtung (1) gemäß einem der vorhergehenden Ansprüche, wobei die Eintrittsöffnungen (15) beabstandet zu den Enden des Flügelprofilabschnitts (6) angeordnet sind

9. Sensorvorrichtung (1) gemäß einem der vorhergehenden Ansprüche, wobei die Kanten der Profilnase (8) und des Profilendes (9) senkrecht zur Anlagefläche (15) verlaufen.

10. Sensorvorrichtung (1) gemäß einem der vorhergehenden Ansprüche, wobei der Drucksensor (2) im Fuß (4) angeordnet ist.

11. Sensorvorrichtung (1) gemäß einem der vorhergehenden Ansprüche, wobei der Drucksensor (2) als Differenzdrucksensor ausgebildet ist und im Fuß (4), bevorzugt im außerhalb des Strömungskanals (20) befindlichen Bereich des Fußes (4), eine Zusatzöffnung (21)vorgesehen ist, mit der mittels eines weiteren Druckkanals (11) der Differenzdrucksensor (2) in fluidleitender Verbindung steht.

12. Sensorvorrichtung (1) gemäß einem der vorhergehenden Ansprüche, wobei ferner ein Temperatursensor (2), beispielsweise ein NTC-Sensor, zur Erfassung einer Temperatur im Strömungskanal (20) und Umwandlung in eine elektrische Messgröße vorgesehen ist.

13. Sensorvorrichtung (1) gemäß dem vorhergehenden Anspruch, wobei der Temperatursensor (3) am freien, von dem Fuß (4) abgewandten Ende des Fortsatzes (6) angeordnet ist.

14. Sensorvorrichtung (1) gemäß einem der vorhergehenden Ansprüche, wobei jeweils mehrere, zueinander beabstandete, beispielsweise zwei, Eintrittsöffnungen (15) pro Profilseite (7) vorgesehen sind.

15. Sensorvorrichtung (1) gemäß dem vorhergehenden Anspruch, wobei die mehreren Eintrittsöffnungen (15) auf gleicher Profiltiefe angeordnet sind.

16. Verwendung der Sensorvorrichtung (1) gemäß einem der vorhergehenden Ansprüche in einem Kraftfahrzeug.

## Claims

1. Sensor device (1) for detecting at least one pressure in a flow channel (20) of an air conditioner, having:
a foot (4), which defines a contact surface (5) for pressure-tight fit on a wall (18) of the flow channel (20);
a projection (6) extending into the flow channel (18),
a pressure sensor (2) for converting the pressure into an electrical measured variable;
wherein the projection (6) forms at least one wing section (6), having a wing profile, with a straight mean camber line (19) and a symmetrical course, in relation to this, of the profile sides (7), a profile nose (8), and a profile end (9),
**characterized in that** at least one inlet opening (15) is provided in each profile side (7), and each of the inlet openings (15) is in fluid-tight connection with the pressure sensor (2) via a pressure channel (10), and **in that** the profile sides (7) are flat and parallel and extend over at least 60% of the profile depth, and **in that** the distance (X) of the central point of the at least one inlet opening from the edge of the profile nose (8) corresponds to at least three times the maximum thickness (D) of the wing profile.

2. Sensor device (1) according to the previous claim, wherein the projection (6) is arranged in such a manner that the air stream flows over the profile nose (8) and that the air stream flows away from the profile end (9).

3. Sensor device (1) according to one of the previous claims, wherein the positioning of the at least one inlet opening (15) is symmetrical on the profile sides.

4. Sensor device (1) according to one of the previous claims, wherein the profile nose (8) and the profile end (9) are rounded.

5. Sensor device (1) according to the previous claim, wherein the curvatures of the profile nose (8) and the profile end (9) are identical.

6. Sensor device (1) according to one of the two previous claims, wherein the flat profile sides (7) extend over at least 70% of the profile depth.

7. Sensor device (1) according to one of the previous claims, wherein the diameter of the inlet openings (15) corresponds to no more than 2 mm.

8. Sensor device (1) according to one of the previous claims, wherein the inlet openings (15) are arranged at a distance from the ends of the wing profile sections (6).

9. Sensor device (1) according to one of the previous claims, wherein the edges of the profile nose (8) and of the profile end (9) run perpendicular to the contact surface (15).

10. Sensor device (1) according to one of the previous claims, wherein the pressure sensor (2) is arranged in the foot (4).

11. Sensor device (1) according to one of the previous claims, wherein the pressure sensor (2) is designed as a differential pressure sensor, and, in the foot (4) - preferably, in the region of the foot (4) located outside the flow channel (20) - an additional opening (21) is provided with which it is in fluid-conductive connection via an additional pressure channel (11) of the differential pressure sensor (2).

12. Sensor device (1) according to one of the previous claims, wherein, further, a temperature sensor (2), e.g., an NTC sensor, is provided for detecting a temperature in the flow channel (20) and for converting it into an electrical measured variable.

13. Sensor device (1) according to the previous claim, wherein the temperature sensor (3) is arranged on the free end, facing away from the foot (4), of the projection (6).

14. Sensor device (1) according to one of the previous claims, wherein, respectively, several, e.g., two, inlet openings (15) spaced apart from each other are provided per profile side (7).

15. Sensor device (1) according to the previous claim, wherein the several inlet openings (15) are arranged at the same profile depth.

16. Use of the sensor device (1) according to one of the previous claims in a motor vehicle.

## Revendications

1. Dispositif capteur (1) destiné à détecter au moins une pression dans un canal d'écoulement (20) d'une installation de climatisation, présentant :
un pied (4), qui définit une surface d'appui (5) pour l'application étanche à la pression sur une paroi (18) du canal d'écoulement (20) ;
un prolongement (6) s'avançant dans le canal d'écoulement (18),
un capteur de pression (2) destiné à convertir la pression en une grandeur de mesure électrique ;
le prolongement (6) formant au moins une partie d'aile (6) présentant un profil d'aile ayant une ligne (19) d'ossature droite et une allure des côtés (7) de profil symétrique par rapport à celle-ci, un nez (8) de profil et une extrémité (9) de profil,
**caractérisé en ce que** dans chaque côté (7) de profil se trouve au moins une ouverture d'entrée (15) et chacune des ouvertures d'entrée (15) est en communication fluidique avec le capteur de pression (2) par l'intermédiaire d'un canal de pression (10) et **en ce que** les côtés (7) de profil sont plats et parallèles et s'étendent sur au moins 60 % de la profondeur du profil et **en ce que** la distance (X) du point central de ladite au moins une ouverture d'entrée à l'arête du nez (8) de profil correspond au moins au triple de l'épaisseur maximale (D) du profil d'aile.

2. Dispositif capteur (1) selon la revendication précédente, dans lequel le prolongement (6) est disposé de sorte que le nez (8) de profil est balayé par le flux d'air et que le flux d'air est évacué depuis l'extrémité (9) de profil.

3. Dispositif capteur (1) selon l'une quelconque des revendications précédentes, dans lequel les positionnements de ladite au moins une ouverture d'entrée (15) sur les côtés de profil sont symétriques.

4. Dispositif capteur (1) selon l'une quelconque des revendications précédentes, dans lequel le nez (8) de profil et l'extrémité (9) de profil sont arrondis.

5. Dispositif capteur (1) selon la revendication précédente, dans lequel la courbure du nez (8) de profil et de l'extrémité (9) de profil sont identiques.

6. Dispositif capteur (1) selon l'une quelconque des deux revendications précédentes, dans lequel les côtés (7) de profil plats s'étendant sur au moins 70 % de la profondeur de profil.

7. Dispositif capteur (1) selon l'une quelconque des revendications précédentes, dans lequel le diamètre des ouvertures d'entrée (15) correspond au plus à 2 mm.

8. Dispositif capteur (1) selon l'une quelconque des revendications précédentes, dans lequel les ouvertures d'entrée (15) sont disposées à une certaine distance des extrémités de la partie de profil d'aile (6).

9. Dispositif capteur (1) selon l'une quelconque des revendications précédentes, dans lequel les arêtes du nez (8) de profil et de l'extrémité (9) de profil s'étendent perpendiculairement à la surface d'appui (15).

10. Dispositif capteur (1) selon l'une quelconque des revendications précédentes, dans lequel le capteur de pression (2) est disposé dans le pied (4).

11. Dispositif capteur (1) selon l'une quelconque des revendications précédentes, dans lequel le capteur de pression (2) est conçu comme un capteur de pression différentielle et une ouverture supplémentaire (21) est située dans le pied (4), de préférence dans la zone du pied (4) se trouvant à l'extérieur du canal d'écoulement (20), avec laquelle le capteur de pression différentielle (2) est en communication fluidique au moyen d'un autre canal de pression (11).

12. Dispositif capteur (1) selon l'une quelconque des revendications précédentes, dans lequel, en outre, un capteur de température (2), par exemple un capteur NTC, est prévu, destiné à détecter une température dans le canal d'écoulement (20) et à la convertir en une grandeur de mesure électrique.

13. Dispositif capteur (1) selon la revendication précédente, dans lequel le capteur de température (3) est disposé au niveau de l'extrémité libre du prolongement (6), opposée au pied (4).

14. Dispositif capteur (1) selon l'une quelconque des revendications précédentes, dans lequel plusieurs ouvertures d'entrée (15), par exemple au nombre de deux, écartées les unes des autres sont respectivement prévues par côté (7) de profil.

15. Dispositif capteur (1) selon la revendication précédente, dans lequel lesdites plusieurs ouvertures d'entrée (15) sont disposées à la même profondeur de profil.

16. Utilisation du dispositif capteur (1) selon l'une quelconque des revendications précédentes dans un véhicule automobile.
